# EUROPÄISCHE PATENTSCHRIFT

(11) **EP 0 426 101 B1**
(45) Veröffentlichungstag und Bekanntmachung des Hinweises auf die Patenterteilung: **14.09.1994**
(21) Anmeldenummer: 90120782.9
(22) Anmeldetag: 30.10.1990
(51) Int. Cl.: B29C 47/66, B29C 47/40

(54) **Extrudergehäusebauteil für einen Zweischneckenextruder und Verfahren zur Herstellung**
Cylinder component for twin screw extruder and method of manufacture
Elément de cylindre d'une extrudeuse pour un dispositif à deux vis et procédé de fabrication

(30) Priorität: 02.11.1989 DE 3936438
(43) Veröffentlichungstag der Anmeldung: 08.05.1991
(73) Patentinhaber: Reifenhäuser GmbH & Co., Maschinenfabrik, 53844 Troisdorf (DE)
(72) Erfinder: Kaiser, Hartmut, W-4330 Mülheim a.d. Ruhr (DE); Lülsdorf, Peter, W-5216 Niederkassel-Mondorf (DE)
(74) Vertreter: Andrejewski, Walter

(56) Entgegenhaltungen:
- DE-B- 2 423 785
- DE-C- 3 734 328
- US-A- 4 519 713
- KAUTSCHUK + GUMMI KUNSTSTOFFE, Band 39, Nr. 11, November 1986, Seite 1044, Heidelberg, DE; "Korrosions- und verschleissfest: nahtlose Zylinder für Doppelschnecken-Compoundierer"

## Beschreibung

Die Erfindung betrifft ein Extrudergehäusebauteil für einen Zweischneckenextruder zur Verarbeitung von thermoplastischem Kunststoff und von Kunststoff-Mischungen, bestehend aus einem Gehäusewerkstoff und einem verschleißhemmenden Werkstoff, - mit zwei Aufnahmekammern für die Extruderschneckenwelle, welche Aufnahmekammern sich achtförmig durchdringen, wobei der verschleißhemmende Werkstoff als Hartphaseschicht aufnahmekammerseitig angeordnet ist und das Gehäusebauteil als einteiliges, nahtloses Bauteil ausgeführt ist. Die Erfindung betrifft fernerhin ein Verfahren zur Herstellung eines solchen Extrudergehäusebauteils gemäß Oberbegriff des Anspruchs 6. - In der Kunststoffverarbeitung nimmt der Anteil mineralischer und oxidischer Füllstoffe ständig zu. Erreicht der Füllstoffanteil 50 %, so wird gleichsam der Kunststoff selbst zum Füllstoff. Beim Spritzgießen von keramischen Massen dient der Kunststoff nur noch als Bindemittel, wobei sein Anteil z. B. 20 % beträgt. Derartige Materialmischungen bedingen extrem hohe Verschleißbelastungen an der Oberfläche der Aufnahmekammern und an den Extruderschnecken. Um diesen Anforderungen zu genügen, ist der verschleißhemmende Werkstoff in Form der Hartphaseschicht erforderlich.

Ein aus der Praxis bekanntes Extrudergehäusebauteil ist fertigungstechnisch ein mehrteiliges Bauteil. Es ist beispielsweise aus zwei Längshälften im Bereich der Längsmitte mittels Elektronenstrahlschweißung zusammengeschweißt und besitzt insoweit eine entsprechende Schweißnaht. Die Mehrteiligkeit besteht auch darin, daß die Hartphaseschicht auf die Innenwandung der Aufnahmekammern nachträglich aufgebracht wurde, z. B. als Auftragsschweißung, Ausschleudern o. dgl. Das ist fertigungstechnisch aufwendig, zumal das Extrudergehäusebauteil oder die beiden Hälften des Extrudergehäusebauteils aus Schmiedestücken mit einem hohen Anteil an spanender Bearbeitung gefertigt werden. Auch die nachträglich aufgebrachte Hartphaseschicht bedarf der aufwendigen spanenden (einschließlich schleifenden) Bearbeitung. Insoweit wird der Bearbeitungsaufwand um so höher, je härter die Hartphaseschicht eingestellt ist.

Bei einem Extrudergehäusebauteil der eingangs beschriebenen Gattung (DE-Z ''Kautschuk + Gummi Kunststoffe, Band 39, Nr. 11, November 1986, Seite 1044) werden die Aufnahmekammern für die Extruderschneckenwelle mit einem Metallisierverfahren ausgekleidet, so daß sich eine durchgehende Bimetall-Oberfläche ergibt, die mit dem Stahlmantel metallurgisch verbunden ist. Auch dabei läßt sich eine Endbearbeitung nicht vermeiden. - Grundsätzlich bekannt ist die Technologie des heißisostatischen Pressens (HIP), die auch dazu eingesetzt wurde, pulvermetallurgischen Werkstoff zu einer Beschichtung zu verdichten (DE-C-37 34 328).

Demgegenüber liegt der Erfindung die Aufgabe zugrunde, ein Extrudergehäusebauteil anzugeben, welches mit wesentlich geringerem Aufwand an spanender Bearbeitung hergestellt werden kann. Der Erfindung liegt fernerhin die Aufgabe zugrunde, ein Verfahren anzugeben, mit dem eine besonders einfache Herstellung möglich ist.

Zur Lösung dieser Aufgabe lehrt die Erfindung, daß das Gehäusebauteil sowohl im Gehäusewerkstoff-Bereich als auch im Hartphaseschicht-Bereich eine isotrope Gefügestruktur pulvermetallurgischen Ursprungs mit HIP-Textur aufweist, und daß der Gehäusewerkstoff-Bereich sowie der Hartphaseschicht-Bereich durch eine Diffusionsschicht verbunden sind. Eine bevorzugte Ausführungsform der Erfindung ist dadurch gekennzeichnet daß die Diffusionsschicht aus dem Gehäusewerkstoff, dem Werkstoff für die Hartphaseschicht und dem metallischen Werkstoff eines Werkstofftrennmantels besteht. - HIP steht für die an sich bekannte Technologie des heißisostatischen Pressens. Diese Technologie wird erfindungsgemäß neu und besonders angewandt. Die Gefügestruktur, die sich dabei einstellt, zeichnet sich durch sehr große Feinheit und hohe Isotrope aus. Von einer HIP-Textur wird im Rahmen der Erfindung in dem Sinne gesprochen, als die bei Schmiedestücken übliche Schmiedetextur nicht mehr erkennbar, selbst Mikroporen praktisch nicht mehr vorhanden sind und eine homogene Isotrope vorherrscht. Das erfindungsgemäße Extrudergehäusebauteil wird insoweit zunächst auf besondere Weise hergestellt, nämlich nach den Regeln der HIP-Technologie. Die spanende (auch schleifende) Bearbeitung ist bei einem erfindungsgemäßen Extrudergehäusebauteil auf die Außenoberfläche des Gehäuses und die Innenoberfläche der Hartphaseschicht beschränkt, die durch einen entsprechenden Kern beim heißisostatischen Pressen vorgeformt wurde und daher nur geringfügig der spanenden Bearbeitung, einschließlich des Feinschleifens und Läppens bedarf.

Nach bevorzugter Ausführungsform der Erfindung verlaufen die beiden Aufnahmekammern konisch, sie sind also zur Aufnahme von konischen Extruderschnecken eingerichtet. Auch insoweit gelten die vorstehend beschriebenen Vorteile, zumal auch die konische Hartphaseschicht im Rahmen der HIP-Technologie, inbes. nach dem zur Erfindung gehörenden Verfahren, leicht hergestellt werden kann.

Im einzelnen bestehen im Rahmen der Erfindung mehrere Möglichkeiten der weiteren Ausbildung und Gestaltung des Extrudergehäusebauteils. Nach bevorzugter Ausführungsform ist die Anordnung so getroffen, daß der Hartphaseschicht-Bereich über die gesamte Länge des Bauteils im wesentlichen die gleiche Schichtdicke aufweist. Bei dem Extrudergehäusebauteil kann es sich um ein solches handeln, welches mit identischen Gehäusebauteilen zu dem Gehäuse des Zweischneckenextruders zusammenbaubar ist. Bei dem Extrudergehäusebauteil kann es sich auch um ein solches handeln, dessen Länge der Länge des Gehäuses des Zweischneckenextruders entspricht.

Wie bereits erwähnt, ist die HIP-Technologie an sich bekannt. Sie wird erfindungsgemäß zur Herstellung des Extrudergehäusebauteils in besonderer Weise angewendet. Überraschenderweise erlaubt es die erfindungsgemäß angewendete HIP-Technologie, ein Extrudergehäusebauteil herzustellen, bei dem die beiden Aufnahmekammern konisch verlaufen. Dabei kann mit einem entsprechenden konischen Formaußenmantel, einem entsprechenden konischen Formkern und einem konischen Werkstoff-Trennmantel gearbeitet werden.

Gegenstand der Erfindung ist auch ein besonders einfaches Verfahren zur Herstellung eines Extrudergehäusebauteils des beschriebenen erfindungsgemäßen Aufbaus. Dieses Verfahren ist Gegenstand der Patentansprüche 6 bis 10.

Im Rahmen der Erfindung können für den Gehäusewerkstoff die bei Extrudergehäusebauteilen üblichen Stahllegierungen eingesetzt werden. Erfindungsgemäß können aber für die Hartphaseschicht auch extrem harte Werkstoffe eingesetzt werden, da nur noch in geringem Umfang eine spanende Bearbeitung erforderlich ist, weil bei Anwendung des erfindungsgemäßen Verfahrens Oberflächen entstehen, und zwar insbes. in den Aufnahmekammern, die mit hoher Genauigkeit mit den vorgegebenen Werten übereinstimmen.

Im folgenden wird die Erfindung anhand einer Zeichnung, deren Fig. 1 bis 3 nur ein Ausführungsbeispiel betreffen, erläutert. Es zeigen
Fig. 1 einen Querschnitt durch ein erfindungsgemäßes Extrudergehäuse,
Fig. 2 den vergrößerten Ausschnitt A aus dem Gegenstand der Fig. 1,
Fig. 3 eine Seitenansicht des Gegenstandes der Fig. 1 in kleinerem Maßstab, teilweise aufgebrochen und
Fig. 4 eine Tabelle mit Werkstoffkenndaten.

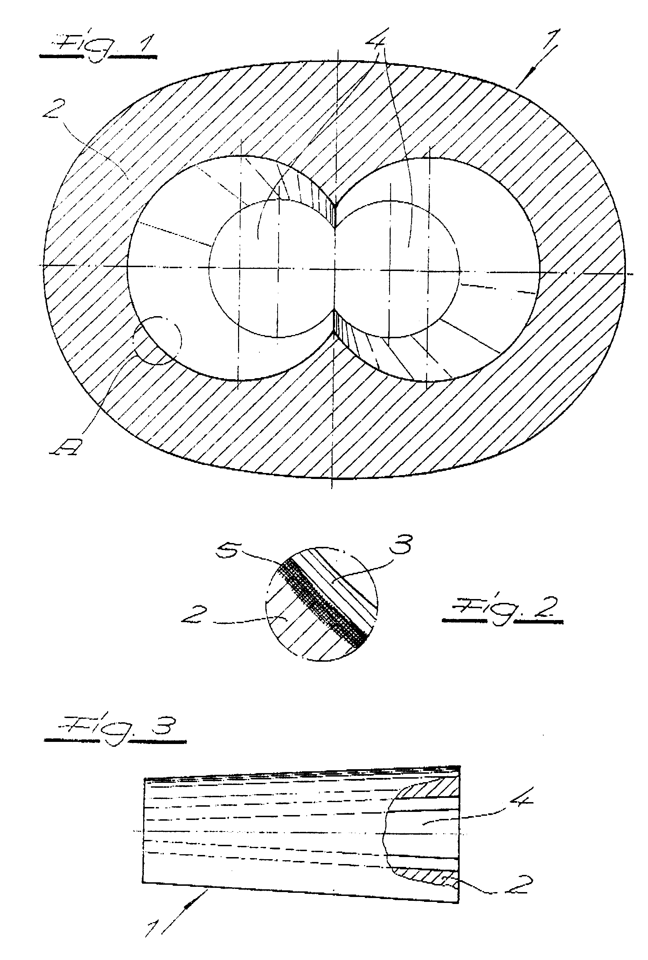

Das in den Fig. 1 bis 3 dargestellte und erläuterte Extrudergehäusebauteil 1 ist für einen Zweischneckenextruder zur Verarbeitung von thermoplastischem Kunststoff und Kunststoffmischungen bestimmt. Es besteht aus einem Gehäusewerkstoff 2 und einem verschleißhemmenden Werkstoff 3. Es besitzt zwei Aufnahmekammern 4 für die nicht gezeichneten Extruderschneckenwellen, welche Aufnahmekammern 4 sich achtförmig durchdringen. Der verschleißhemmende Werkstoff 3 ist als Hartphaseschicht aufnahmekammerseitig angeordnet, wozu auf die Fig. 2 verwiesen wird.

Das erfindungsgemäße Extrudergehäusebauteil 1 ist ein einteiliges, nahtloses Bauteil. Es besitzt sowohl im Gehäusewerkstoff-Bereich 2 als auch im Hartphaseschicht-Bereich 3 eine isotrope Gefügestruktur mit HIP-Textur. Das soll durch die Schraffur in Fig. 2 angedeutet sein. Im übrigen sind der Gehäusewerkstoff-Bereich 2 sowie der Hartphaseschicht-Bereich 3 durch eine ebenfalls sehr isotrope Diffusionsschicht 5 verbunden. Der Hartphaseschicht-Bereich 3 besitzt über die gesamte Länge des Bauteils im wesentlichen die gleiche Schichtdicke. Bei dem Extrudergehäusebauteil 1 nach den Fig. 1 bis 3 kann es sich um ein solches handeln, welches mit anderen, insbes. mit grundsätzlich gleich aufgebauten, zu dem Gehäuse des Zweischneckenextruders zusammenbaubar ist. Dazu können auch Verbindungsausbildungen, beispielsweise in Form von Flanschen, an geformt sein. Die Fig. 3 zeigt die Ausführungsform, bei der das Extrudergehäusebauteil 1 der Länge des gesamten Gehäuses des Zweischneckenextruders entspricht.

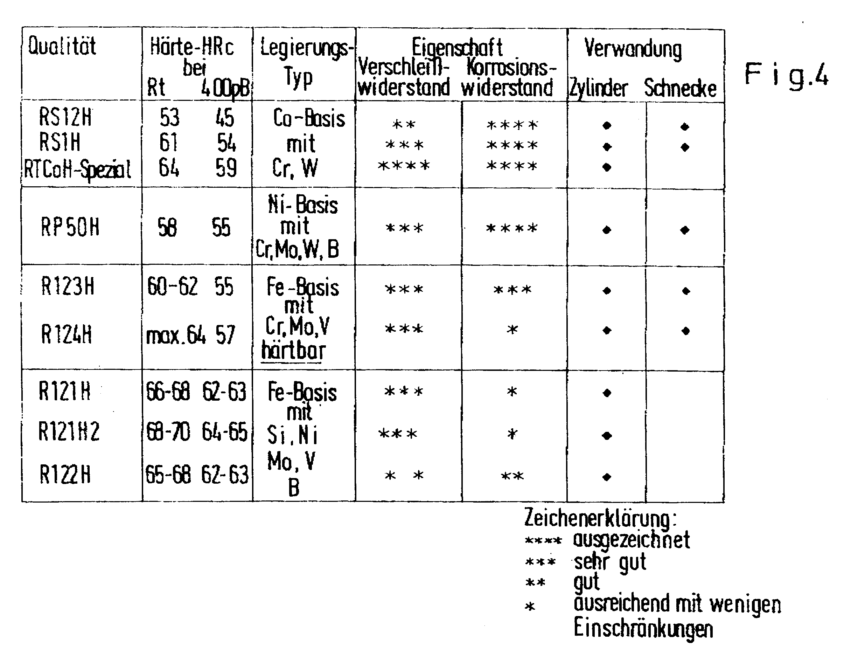

Die Tabelle der Fig. 4 gibt eine Aufzählung von verschleißhemmenden Werkstoffen, aus denen das erfindungsgemäße Extrudergehäusebauteil 1 in bezug auf verschleißhemmenden Werkstoff 3 aufgebaut werden kann. Die Tabelle spricht für sich. Sie läßt erkennen, daß auch die Extruderschnecken mit einer entsprechenden Hartphaseschicht ausgerüstet sein können.

## Patentansprüche

1. Extrudergehäusebauteil für einen Zweischneckenextruder zur Verarbeitung von thermoplastischem Kunststoff und von Kunststoff-Mischungen, bestehend aus einem Gehäusewerkstoff (2) und einem verschleißhemmenden Werkstoff, - mit
zwei Aufnahmekammern (4) für die Extruderschneckenwellen, welche Aufnahmekammern sich achtförmig durchdringen,
wobei der verschleißhemmende Werkstoff als Hartphaseschicht (3) aufnahmekammerseitig angeordnet ist und das Gehäusebauteil (1) als einteiliges nahtloses Bauteil ausgeführt ist, **dadurch gekennzeichnet**, daß das Gehäusebauteil (1)
sowohl im Gehäusewerkstoff-Bereich (2) als auch im Hartphaseschicht-Bereich (3) eine isotrope Gefügestruktur pulvermetallurgischen Ursprungs mit HIP-Textur aufweist
und daß der Gehäusewerkstoff-Bereich (2) sowie der Hartphaseschicht-Bereich (3) durch eine Diffusionsschicht (5) verbunden sind.

2. Extrudergehäusebauteil nach Anspruch 1, dadurch gekennzeichnet, daß die Diffusionsschicht (5) aus dem Gehäusewerkstoff (2), dem Werkstoff für die Hartphaseschicht (3) und dem metallischen Werkstoff eines Werkstofftrennmantels besteht.

3. Extrudergehäusebauteil nach einem der Ansprüche 1 oder 2, dadurch gekennzeichnet, daß die beiden Aufnahmekammern (4) konisch verlaufen und zur Aufnahme von konischen Extruderschnecken eingerichtet sind.

4. Extrudergehäusebauteil nach einem der Ansprüche 1 bis 3, dadurch gekennzeichnet, daß der Hartphaseschicht-Bereich (3) über die gesamte Länge des Bauteils im wesentlichen die gleiche Schichtdicke aufweist.

5. Extrudergehäusebauteil nach einem der Ansprüche 1 bis 4, welches mit identischen Gehäusebauteilen (1) zu dem Gehäuse des Zweischneckenextruders zusammenbaubar ist.

6. Verfahren zur pulvermetallurgischen Herstellung eines Gehäusebauteils nach einem der Ansprüche 1 bis 5,
wobei eine Preßform hergestellt wird, die einen Formaußenmantel aus Blech, einen massiven Formkern mit achtformigem Querschnitt aus Stahl und einen Werkstoff-Trennmantel aus Stahlblech aufweist, der einen geringen Diffusionswiderstand besitzt,
wobei in den Preßformraum zwischen Formkern und Werkstoff-Trennmantel das Pulver für die Hartphaseschicht (3) sowie in den Preßformraum zwischen Werkstoff-Trennmantel und Formaußenmantel das Pulver für den Gehäusewerkstoff (2) eingebracht werden und die gefüllten Preßformräume evakuiert werden, wobei die Preßformräume verschlossen werden und das Gehäuseteil (1) durch heißisostatisches Pressen (HIP) geformt und gebildet wird, dadurch gekennzeichnet, daß beim heißisostatischen Pressen der Formaußenmantel einer Knautschverformung unterworfen und der Werkstoff-Trennmantel in die Diffusionsschicht (5) überführt wird, in die außerdem der Gehäusewerkstoff (2) sowie der Werkstoff der Hartphaseschicht (3) eindringen.

7. Verfahren nach Anspruch 6, wobei die Hartphaseschicht sowie das Pulver für den Gehäusewerkstoff (2) mit einer Volumenfüllung oder Klopfdichte von etwa 65 % eingebracht werden.

8. Verfahren nach einem der Ansprüche 6 oder 7, wobei die Evakuierung bis zu etwa 10⁻⁴ Torr durchgeführt wird.

9. Verfahren nach einem der Ansprüche 6 bis 8, wobei das heißisostatische Pressen in einer Edelgasatmosphäre, z. B. in einer Argonatatmosphäre, durchgeführt und dabei Drücke von etwa 2000 oder mehr bar aufgebracht werden.

10. Verfahren nach einem der Ansprüche 1 bis 9, wobei mit einer Temperatur von 900 bis 1200 °C gearbeitet und der Formkern durch ein Kühlmittel, welches in Bohrungen des Formkerns geführt ist, gekühlt wird.

## Claims

1. An extruder housing component for a two-screw extruder for processing thermoplastics and mixtures of plastics, consisting of a housing material (2) and a wear-inhibiting material, - with
two reception chambers (4) for the extruder screw shafts, said chambers inter-penetrating in the form of a figure-of-eight,
wherein the wear-inhibiting material is provided in the form of a hard phase layer (3) on the reception chamber side and the housing component (1) is constructed as a one-piece seamless component, characterised in that the housing component (1)
has an isotropic structure of powder-metallurgical origin with HIP texture both in the housing material zone (2) and in the hard phase layer zone (3)
and in that the housing material zone (2) and the hard phase layer zone (3) are connected by a diffusion layer (5).

2. An extruder housing component according to claim 1, characterised in that the diffusion layer (5) consists of the housing material (2), the material for the hard phase layer (3) and the metallic material of a material separating surface.

3. An extruder housing component according to claim 1 or 2, characterised in that the two reception chambers (4) extend conically and are adapted to receive conical extruder screws.

4. An extruder housing component according to any one of claims 1 to 3, characterised in that the hard phase layer zone (3) has substantially the same layer thickness over the entire length of the component.

5. An extruder housing component according to any one of claims 1 to 4, which is adapted to be assembled with identical housing components (1) to form the housing of the two-screw extruder.

6. A process for the powder-metallurgical production of a housing component according to any one of claims 1 to 5,
wherein a press mould is made, comprising an outer mould surface of sheet metal, a solid mould core of octagonal cross-section consisting of steel and a material separating surface of sheet steel having a low diffusion resistance,
wherein the powder for the hard phase layer (3) is introduced into the press mould cavity between the mould core and the material separating surface and the powder for the housing material (2) is introduced into the press mould cavity between the material separating surface and the outer mould surface, and the filled press mould cavities are evacuated, the press mould cavities being closed and the housing part (1) being moulded and formed by hot-isostatic pressing (HIP), characterised in that during the hot-isostatic pressing the outer mould surface undergoes a crushing deformation and the material separating surface is transferred into the diffusion layer (5), into which the housing material (2) and the material of the hard phase layer (3) also penetrate.

7. A process according to claim 6, wherein the hard phase layer and the powder for the housing material (2) are introduced with a volume filling or tap density of about 65%.

8. A process according to claim 6 or 7, wherein the evacuation is carried to about 10⁻⁴ Torr.

9. A process according to any one of claims 6 to 8, wherein the hot-isostatic pressing is performed in an inert gas atmosphere, e.g. an argon atmosphere, pressures of about 2000 or more bar being applied.

10. A process according to any one of claims 1 to 9, wherein the temperature used is within the range from 900 to 1200°C and the mould core is cooled by a cooling medium guided in bores in the mould core.

## Revendications

1. Élément de cylindre d'une extrudeuse pour un dispositif à deux vis pour la fabrication de thermoplastiques et de mélanges plastiques, composé d'un matériau de corps (2) et d'un matériau anti-usure, - avec
deux chambres (4) recevant les arbres des vis de l'extrudeuse, les chambres s'interpénétrant en huit,
le matériau anti-usure étant appliqué comme couche en phase dure (3) du côté chambre et l'élément de cylindre (1) étant conçu comme élément en une partie sans soudure et **caractérisé par le fait** que l'élément de cylindre (1)
présente tant au niveau du matériau du cylindre (2) qu'au niveau de la couche en phase dure (3) une structure isotrope formée par métallurgie des poudres avec texture HIP (compression isostatique à chaud)
et par le fait que le niveau du matériau du cylindre (2) et le niveau de la couche en phase dure (3) sont liés par une couche de diffusion (5).

2. Élément de cylindre d'une extrudeuse selon revendication 1, **caractérisé par le fait** que la couche de diffusion (5) est composée du matériau du cylindre (2), du matériau de la couche en phase dure (3) et du matériau métallique d'une enveloppe séparatrice de matériau.

3. Élément de cylindre d'une extrudeuse selon l'une des revendications 1 ou 2, **caractérisé par le fait** que les deux chambres (4) sont de forme conique et sont destinées à recevoir des vis d'extrudeuse coniques.

4. Élément de cylindre d'une extrudeuse selon l'une des revendications 1 à 3, **caractérisé par le fait** que le niveau de la couche en phase dure (3) présente essentiellement la même épaisseur de couche sur toute la longueur de la pièce.

5. Élément de cylindre d'une extrudeuse selon l'une des revendications 1 à 4, pouvant être monté avec des éléments de cylindre identiques (1) pour composer l'élément de cylindre de l'extrudeuse à deux vis.

6. Procédé de fabrication d'un élément de cylindre par métallurgie des poudres, selon l'une des revendications 1 à 5,
avec réalisation d'un moule possédant une enveloppe extérieure en tôle, un noyau massif de section octogonale en acier et une enveloppe séparatrice de matériau en tôle d'acier possédant une résistance de diffusion faible,
la poudre pour la couche en phase dure (3) étant introduite dans la cavité du moule entre le noyau et l'enveloppe séparatrice de matériau et la poudre pour le matériau du cylindre (2) étant introduite dans la cavité du moule entre l'enveloppe séparatrice de matériau et l'enveloppe extérieure du moule et les cavités du moule remplies étant mises sous vide, les cavités du moule étant fermées et l'élément de cylindre (1) étant façonné et formé par compression isostatique à chaud (HIP), **caractérisé par le fait** que lors de la compression isostatique à chaud, l'enveloppe extérieure du moule est soumise à une déformation par froissage et que l'enveloppe séparatrice de matériau est transférée dans la couche de diffusion (5) dans laquelle pénètrent en outre le matériau du cylindre (2) et le matériau de la couche en phase dure (3).

7. Procédé selon revendication 6, la couche en phase dure et la poudre pour le matériau du cylindre (2) étant introduites avec un remplissage à volume donné ou une masse volumique après tassement d'environ 65 %.

8. Procédé selon l'une des revendications 6 ou 7, la mise sous vide étant effectuée jusqu'à environ 10-4 torr.

9. Procédé selon l'une des revendications 6 à 8, la compression isostatique à chaud étant réalisée sous atmosphère de gaz rare, p. ex. sous atmosphère d'argon, avec application de pressions d'environ 2000 bars ou plus.

10. Procédé selon l'une des revendications 1 à 9 avec travail à une température de 900 à 1200 °C, le noyau du moule étant refroidi par un réfrigérant circulant dans les canaux du noyau.
